Europäisches Patentamt

European Patent Office

Office européen des brevets

(19)

(11) **EP 1 473 927 B1**

(12) **FASCICULE DE BREVET EUROPEEN**

(45) Date de publication et mention
de la délivrance du brevet:
**07.12.2005 Bulletin 2005/49**

(51) Int Cl.$^7$: **H04N 3/15**, H04N 5/335

(21) Numéro de dépôt: **04290772.5**

(22) Date de dépôt: **23.03.2004**

(54) **Procédé d'échantillonnage du signal délivré par un pixel actif d'un capteur d'image, et capteur correspondant**

Verfahren zur Abtastung des von einem aktiven Pixel eines Bildsensors ausgelesenen Ausgangssignals, und entsprechender Bildsensor

Method of sampling an active pixel output signal of an image sensor, and corresponding image sensor

(84) Etats contractants désignés:
**DE FR GB**

(30) Priorité: **30.04.2003 FR 0305363**

(43) Date de publication de la demande:
**03.11.2004 Bulletin 2004/45**

(73) Titulaire: **STMicroelectronics S.A.**
**92120 Montrouge (FR)**

(72) Inventeur: **Simony, Laurent**
**38100 Grenoble (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
**US-A1- 2001 033 337        US-A1- 2002 175 269**

EP 1 473 927 B1

**Description**

L'invention concerne le traitement des signaux délivrés par une matrice de pixels d'un capteur d'image, et, plus particulièrement, l'amélioration des performances en dynamique et en bruit de l'échantillonnage du signal issu d'une matrice de pixels actifs réalisée en technologie CMOS.

Un capteur d'image comporte de façon classique une matrice de pixels. Chaque pixel délivre un signal électrique dont le niveau dépend de la quantité de lumière reçue par le pixel. Ce signal est stocké classiquement dans une paire de condensateurs d'échantillonnage puis il est par exemple amplifié dans un amplificateur de lecture.

Traditionnellement, le plancher de bruit d'un capteur d'image CMOS était limité par le bruit de réinitialisation du pixel, qui est de l'ordre de 1 millivolt efficace. Aujourd'hui, des solutions existent pour s'affranchir de ce bruit.

Aussi, la limitation en matière de bruit se trouve aujourd'hui déplacée au niveau des échantillonneurs.

Plus précisément, le passage du courant de polarisation dans le transistor suiveur du pixel provoque un bruit blanc, dont la bande passante est limitée par l'impédance du transistor et la capacité totale du condensateur d'échantillonnage (par exemple de l'ordre de 0,5pF) et de la colonne (ligne de bits)(par exemple de l'ordre de 1pF). Or, ce courant est dimensionné pour des contraintes de vitesse et de précision, et il est typiquement de l'ordre de 1 microampère, ce qui permet d'échantillonner en environ une microseconde.

Par ailleurs, la source de courant participe aussi au bruit blanc.

Actuellement, ce bruit blanc a une valeur moyenne estimée à 150 microvolts environ.

Par ailleurs, la gamme de signal utilisable est d'autant plus limitée que la tension grille-source du transistor suiveur est grande. Et, la tension grille-source est liée à la racine carrée du rapport entre le courant du transistor suiveur et un coefficient dépendant des caractéristiques technologiques du transistor. Or, compte tenu des contraintes dimensionnelles du pixel, ce coefficient technologique ne peut guère être augmenté en pratique. En conséquence, le courant qui passe dans le transistor suiveur qui fixe la valeur de la tension grille-source Vgs. Aussi, est-on contraint d'avoir une tension grille-source forte avec comme conséquence un écrêtage du signal échantillonné.

L'invention vise à améliorer ce problème.

Le but de l'invention est de réduire le bruit d'échantillonnage.

L'invention a également pour but de réduire la tension grille-source du transistor suiveur de façon à exploiter plus de signal utile sans écrêtage.

L'invention propose donc un procédé d'échantillonnage du signal délivré par un pixel actif d'un capteur d'image, ce procédé comprenant une phase de stockage du signal dans une paire de condensateurs d'échantillonnage comportant deux liaisons électriques effectives respectives successives de deux condensateurs d'échantillonnage avec le transistor suiveur du pixel au cours de deux impulsions d'échantillonnage respectives correspondant respectivement à deux niveaux de tension pixel différents successifs appliqués sur la grille du transistor suiveur.

Selon une caractéristique générale de l'invention, la phase de stockage comporte, pour chaque condensateur d'échantillonnage,

- l'application à ce condensateur d'échantillonnage d'une tension égale à la tension pixel correspondante diminuée de la valeur de la tension grille-source du transistor suiveur polarisée avec un courant de polarisation constant prédéterminé, pendant une première durée prédéterminée, de façon à obtenir pour ledit condensateur d'échantillonnage, un état final de charges stable,
- l'interruption du courant de polarisation,
- la fin de l'impulsion d'échantillonnage intervenant au bout d'une deuxième durée prédéterminée après ladite interruption de courant.

Ainsi, selon l'invention, une fois obtenu l'état final de charges pour chaque condensateur d'échantillonnage, le courant de polarisation est coupé. Par conséquent, la tension grille-source devient égale au premier ordre à la tension de seuil du transistor suiveur. Il y a par conséquent moins de tension grille-source, ce qui permet d'exploiter plus de signal utile sans écrêtage. Par ailleurs, les contributions de bruit blanc dues à ce courant de polarisation disparaissent avec ce dernier et il s'ensuit par conséquent un bruit d'échantillonnage réduit.

Plus précisément, après interruption du courant de polarisation, la variation de tension dans la ligne de bits est positive et le courant nécessaire pour produire cette variation passe par le transistor suiveur. Ce courant est très faible et le transistor suiveur se trouve polarisé en faible inversion. Dans cette zone de fonctionnement, la bande de bruit est très réduite et la densité spectrale de bruit présente une amplitude plus faible, d'où une amélioration considérable du bruit.

La deuxième durée est avantageusement choisie de façon, à obtenir à la fin de chaque impulsion d'échantillonnage, un courant résiduel circulant dans le transistor suiveur inférieur à un seuil prédéterminé correspondant à un niveau de seuil prédéterminé du bruit du transistor suiveur.

Ainsi, à titre indicatif, le niveau de seuil prédéterminé pour le bruit du transistor suiveur est compris entre environ 50 et 100 microvolts.

Par ailleurs, la première durée est avantageusement une fraction de la durée de ladite impulsion d'échantillonnage, le courant de polarisation étant alors supérieur à un seuil prédéterminé.

Ainsi, selon un mode de mise en oeuvre de l'invention dans lequel la durée de l'impulsion d'échantillonnage est de l'ordre de 1 microseconde, la première durée peut être de l'ordre de 100 nanosecondes et le courant de polarisation, de l'ordre de 10 microampères. Ceci permet, en utilisant un courant environ 10 à 20 fois supérieur à un courant de polarisation utilisé dans l'art antérieur, d'atteindre une stabilisation d'autant plus rapide pour l'état de charge de chaque condensateur d'échantillonnage.

D'une façon générale, selon l'invention, les tensions atteintes sur les condensateurs d'échantillonnage ne dépendent que des deux niveaux de tension pixel différents. Le principe est donc déterministe.

Le courant fort, avantageusement utilisé avant coupure, est un élément qui participe à l'obtention de ce principe déterministe.

De même, il est avantageux de précharger chaque condensateur d'échantillonnage à une valeur initiale prédéterminée avant chaque impulsion d'échantillonnage. Ainsi, la précharge permet de débuter chaque échantillonnage à partir d'un état déterministe. En effet, dès lors que le courant est coupé, la tension finale vers laquelle on tend dépend de la tension initiale. La précharge permet de perdre toute "mémoire" de la tension échantillonnée au cycle précédent.

L'invention propose également un capteur d'image comprenant une matrice de pixels actifs, et des moyens de traitement des informations délivrées par ladite matrice de pixels actifs, les moyens de traitement comportant une paire de condensateurs d'échantillonnage par colonne de la matrice aptes à être respectivement reliés électriquement au transistor suiveur de chaque pixel de la colonne au cours de deux impulsions d'échantillonnage respectives correspondant respectivement à deux niveaux de tension pixel différents successifs appliqués sur la grille du transistor suiveur.

Selon une caractéristique générale de l'invention, les moyens de traitement comportent une source de courant connectée à chaque colonne de la matrice, et apte à délivrer sur commande à ladite colonne un courant de polarisation constant prédéterminé, et des moyens de commande aptes pour chaque condensateur d'échantillonnage et au cours de l'impulsion d'échantillonnage correspondante,

- à alimenter la colonne avec ledit courant de polarisation pendant une première durée prédéterminée de façon à obtenir pour ledit condensateur d'échantillonnage un état final de charge stable,
- puis à interrompre l'alimentation de ladite colonne par le courant de polarisation,
- la fin de l'impulsion d'échantillonnage intervenant au bout d'une deuxième durée prédéterminée après ladite interruption du courant.

Selon un mode de réalisation de l'invention, la source de courant est connectée à ladite colonne par un interrupteur commandable par les moyens de commande.

Selon un mode de réalisation de l'invention, les moyens de traitement comportent des moyens de précharge aptes à précharger chaque condensateur d'échantillonnage à une valeur initiale prédéterminée avant chaque impulsion d'échantillonnage.

Plus précisément, à titre indicatif, lorsque chaque condensateur d'échantillonnage possède une borne reliée à la masse, les moyens de précharge comportent par exemple deux interrupteurs supplémentaires commandables aptes à relier respectivement les deux autres bornes des deux condensateurs d'échantillonnage à la masse.

Ceci étant il convient de noter ici que le fait de précharger les condensateurs n'est pas indispensable mais permet de gagner du temps pour obtenir un état déterministe à la fin de la première durée. En effet, avec cette précharge, puisque l'on part d'un état déterministe dès le début de la première durée, on le sera aussi au bout de cette première durée.

De même, le fait d'utiliser un courant de polarisation plus grand que la valeur habituelle permet aussi de gagner du temps dans l'obtention de cet état déterministe.

Compte tenu du fait que le phénomène se produisant durant la deuxième durée est lent, l'utilisation en particulier d'un courant de polarisation élevé, permet d'obtenir une durée totale (première durée + deuxième durée) équivalente à la durée d'acquisition de l'échantillon habituellement utilisée dans l'art antérieur (par exemple 1 microseconde).

Mais les avantages de l'invention en matière de réduction de bruit notamment, peuvent être également obtenus sans valeur élevée de courant de polarisation ni précharge, moyennant simplement une durée d'acquisition de l'échantillon plus importante.

L'invention propose également un dispositif d'acquisition d'images, par exemple une caméra vidéo, comportant au moins un capteur d'image tel que défini ci-avant.

D'autres avantages et caractéristiques de l'invention apparaîtront à l'examen de la description détaillée de mode de mise en oeuvre et de réalisation, nullement limitatif, et des dessins annexés sur lesquels :

- la figure 1 est un synoptique schématique d'un capteur d'image selon l'invention,
- la figure 2 illustre plus en détail une partie du capteur d'image de la figure 1, et,
- la figure 3 illustre un chronogramme temporel représentatif d'un mode de mise en oeuvre de l'invention.

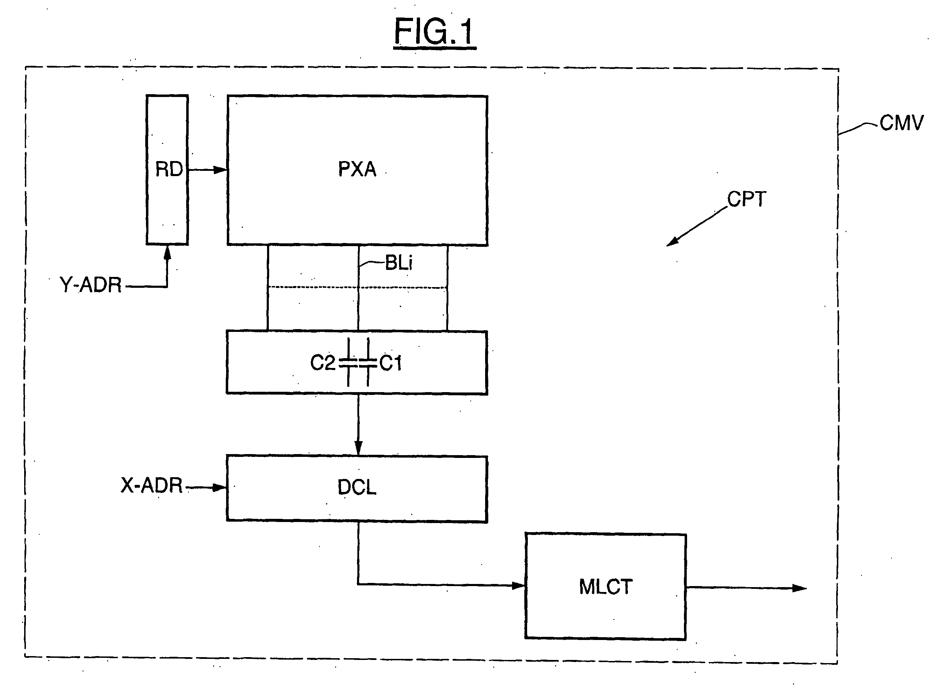

Sur la figure 1, la référence CPT désigne un capteur d'image incorporé par exemple dans une caméra vidéo CMV.

Le capteur d'image CPT comporte une matrice de pixels PXA, organisée en lignes et en colonnes.

Un décodeur lignes RD permet de sélectionner les lignes de la matrice tandis qu'un décodeur colonnes DCL permet de sélectionner les colonnes BLi (ligne de bits) de la matrice.

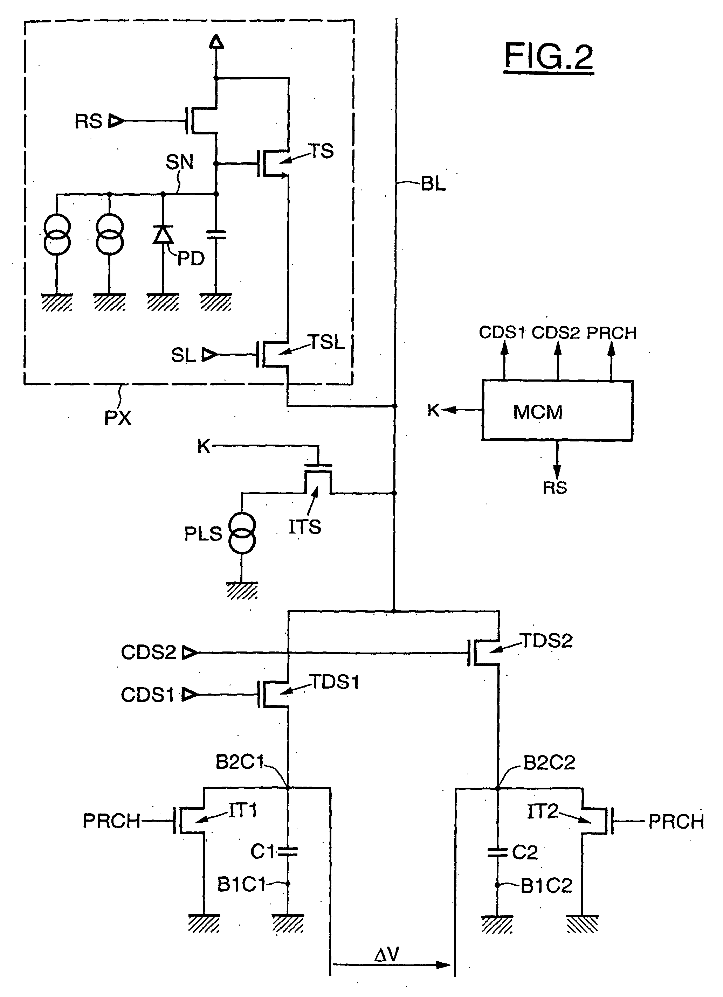

Par ailleurs, une paire de condensateurs d'échantillonnage C1, C2 est connectée à chaque colonne de la matrice par l'intermédiaire de transistors d'échantillonnage comme cela est illustré sur la figure 2.

Enfin, des moyens de lecture MLCT de structure classique sont connus en soi et permettent une lecture des charges stockées dans le condensateur d'échantillonnage C1, C2. De tels moyens de lecture peuvent présenter une architecture permettant une lecture en tension du signal pixel, ou bien une architecture permettant un transfert physique des charges contenues dans les condensateurs d'échantillonnage dans deux condensateurs de rétroaction connectés entre les entrées et les sorties d'un amplificateur de lecture différentiel. Une telle architecture est par exemple décrite dans la demande de brevet français n°0300360 (FR 20030000360) au nom de la Demanderesse. Les moyens de lecture peuvent également comporter classiquement un convertisseur analogique-numérique par colonne.

Si l'on se réfère maintenant plus particulièrement à la figure 2, on voit que chaque pixel PX comporte une photodiode PD dont la cathode est reliée à un condensateur (constitué essentiellement de la capacité propre de la diode, c'est à dire la capacité de la jonction PN de la diode) ainsi qu'à la tension d'alimentation par l'intermédiaire d'un transistor commandé par un signal de remise à zéro (reset) RS. La cathode de la photodiode PD est également reliée à la grille d'un transistor suiveur TS connecté à une ligne de bits (colonne) BL par l'intermédiaire d'un transistor de sélection de ligne TSL.

Ce transistor TSL est commandé par un signal de sélection de lignes SL.

La polarisation du transistor suiveur TS est assurée par des moyens de polarisation PLS connectés sur la ligne de bits BL.

Les moyens de polarisation PLS comportent ici une source de courant et celle-ci est connectée sur la ligne de bits BL par l'intermédiaire d'un interrupteur ITS, formé par exemple d'un transistor MOS, commandé par un signal K.

Par ailleurs, au pied de la colonne BL, sont connectés les deux condensateurs d'échantillonnage C1 et C2.

Dans ce mode de réalisation, les deux bornes B1C1 et B1C2 des deux condensateurs C1 et C2 sont reliées à la masse.

Par ailleurs, l'autre borne B2C1 du condensateur C1 est reliée au pixel PX par l'intermédiaire d'un transistor TDS1 commandé sur sa grille par un signal de commande CDS1.

De même, l'autre borne B2C2 du condensateur C2 est reliée au pixel PX par l'intermédiaire d'un transistor TDS2 commandé sur sa grille par un signal de commande CDS2.

Par ailleurs, les bornes B2C1 et B2C2 des deux condensateurs d'échantillonnage C1 et C2 peuvent être respectivement connectées également à la masse par l'intermédiaire de deux interrupteurs supplémentaires IT1 et IT2 commandés tous les deux par un signal, dénommé ici signal de précharge, PRCH.

Tous les signaux de commande sont délivrés par des moyens de commande MCM, réalisés par exemple à partir de sources de tension et de portes logiques.

Le pixel PX est dit "actif" car il contient un dispositif d'amplification formé dans cet exemple par le transistor suiveur TS. Bien que l'on n'ait représenté dans la figure 2 qu'un exemple d'architecture de pixel actif, le signal lumineux capté par le pixel peut être d'une façon générale modélisé par un générateur de tension appliquant sur la grille du transistor TS successivement deux niveaux de tension différents Vi (initial) et Vf (final). Le signal utile Vs (au niveau du pixel) correspond alors à la différence entre ces deux niveaux Vi et Vf.

Le transistor TSL est, lorsqu'il est passant, un interrupteur conducteur, ce qui permet de connecter la source du transistor suiveur TS à la ligne de bits. A un instant donné, seul un pixel y est connecté, en l'occurrence, c'est celui appartenant à la ligne sélectionnée.

D'une façon classique et connue en soi, le courant de polarisation fourni par la source PLS polarise en courant le transistor suiveur TS du pixel de la ligne sélectionnée. Ce transistor TS est donc polarisé en suiveur. Par conséquent, le potentiel de sa source reproduit celui de sa grille, à un décalage Vgs près. Autrement dit, la tension de signal Vs est reproduite sur la ligne de bits, à un décalage Vgs près. La tension $V_{BL}$ sur la ligne de bit BL est donc égale à Vs-Vgs.

Par ailleurs, lorsque le signal Vs fournit le niveau Vi, un premier échantillon est prélevé sur le condensateur d'échantillonnage C1 en actionnant le transistor TDS1 par la commande CDS1. Cette commande CDS 1 est une impulsion restant active pendant par exemple une microseconde.

Lorsque le signal Vs fournit le niveau Vf, un deuxième échantillon est prélevé sur le condensateur d'échantillonnage C2 en actionnant le transistor TDS2 par la commande CDS2. Cette commande CDS2 est également une impulsion d'échantillonnage restant active pendant également environ une microseconde. Finalement, le signal utile est disponible aux instants de désactivation des signaux CDS1 et CDS2 sous la forme de la tension différentielle ΔV présente entre les deux condensateurs d'échantillonnage C1 et C2. Et, c'est cette tension différentielle qui sera par exemple amplifiée dans les moyens de lecture MLCT.

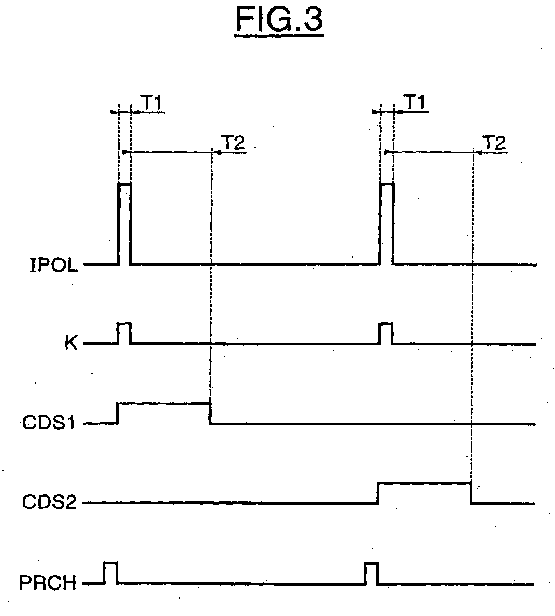

Par rapport à un tel fonctionnement classique, le fonctionnement de l'invention va maintenant être décrit en se référant plus particulièrement à la figure 3, sur laquelle on a reproduit notamment les impulsions d'échantillonnage CDS1 et CDS2. La durée T de chaque impulsion d'échantillonnage a été maintenue à 1 microseconde.

On voit notamment sur cette figure 3 que le courant de polarisation IPOL, délivré par la source de courant PLS, n'est fourni que pendant une petite fraction T1 de la durée de chaque impulsion d'échantillonnage CDS1, CDS2. Ce courant IPOL est ensuite coupé au moyen de l'interrupteur ITS commandé par le signal de commande K.

Cette première durée T1 est prédéterminée de façon à obtenir pour le condensateur d'échantillonnage concerné, un état final de charges stable. Dans le mode de mise en oeuvre préférentiel qui est décrit ici, la valeur nominale du courant de polarisation IPOL est très supérieure à celle utilisée dans les architectures classiques, typiquement de l'ordre de 10 à 20 fois plus grand. Ceci permet d'atteindre une stabilisation d'autant plus rapide du niveau de la tension $V_{BL}$. A titre d'exemple, pour une impulsion d'échantillonnage de l'ordre de 1 microseconde, la première durée T1 est par exemple de l'ordre de 100 nanosecondes avec un courant de polarisation de l'ordre de 10 microampères.

Au bout de la durée T1, on a un état final de charges stable dans le condensateur d'échantillonnage concerné, c'est-à-dire un courant nul à travers ce condensateur d'échantillonnage, à une tolérance près.

Lorsque le courant de polarisation IPOL est coupé, il se produit alors une décroissance très rapide du courant pendant la deuxième durée T2 égale à T-T1.

La tension grille-source du transistor suiveur passe alors de

$$(V_t + \sqrt{\frac{I_{POL}}{K}})$$

à la tension de seuil $V_t$, K étant une constante technologique.

Il y a donc moins de tension grille-source, ce qui permet d'exploiter plus de signal utile sans écrêtage.

Par ailleurs, les contributions de bruit blanc dues au courant de polarisation (transistor suiveur et source de courant) disparaissent avec ce dernier, d'où il résulte un bruit d'échantillonnage réduit.

Plus précisément, quand on coupe le courant, le potentiel $V_{BL}$ de la ligne de bits BL passe, selon la valeur Vi ou Vf de la tension pixel, de

$$(V_{i,f} - V_t - \sqrt{\frac{I_{POL}}{K}})$$

à $V_{i,f} - V_t$.

La variation de tension est positive et le courant nécessaire pour produire cette variation passe dans le transistor suiveur. Ce courant atteint rapidement une valeur très faible (typiquement inférieure à 100 nanoampères), et le transistor suiveur se trouve polarisé en faible inversion. Dans cette zone de fonctionnement, la bande de bruit est très réduite et la densité spectrale de bruit présente une amplitude plus faible, d'où une amélioration considérable du bruit.

Il est également particulièrement avantageux, bien que cela ne soit pas indispensable, de conférer à chaque condensateur d'échantillonnage un état déterministe avant chaque échantillonnage. Une solution consiste alors, comme illustré sur la figure 3, à précharger les condensateurs d'échantillonnage C1 et C2 à une tension nulle avant chaque impulsion d'échantillonnage.

## Revendications

1. Procédé d'échantillonnage du signal délivré par un pixel actif d'un capteur d'images, comprenant une phase de stockage du signal dans une paire de condensateurs d'échantillonnage comportant deux liaisons électriques effectives respectives successives des deux condensateurs d'échantillonnage avec le transistor suiveur du pixel au cours de deux impulsions d'échantillonnage respectives correspondant respectivement à deux niveaux de tension pixel différents successifs appliqués sur la grille du transistor suiveur, **caractérisé par le fait que** la phase de stockage comporte pour chaque condensateur d'échantillonnage (C1 ; C2),

   - l'application à ce condensateur d'échantillonnage (C1 ; C2) d'une tension égale à la tension pixel correspondante diminuée de la valeur de la tension grille-source du transistor suiveur polarisé avec un courant de polarisation constant prédéterminé, pendant une première durée prédéterminée (T1) de façon à obtenir pour ledit condensateur d'échantillonnage un état final de charge stable,
   - l'interruption du courant de polarisation (IPOL),
   - la fin de l'impulsion d'échantillonnage intervenant au bout d'une deuxième durée prédéterminée (T2) après ladite interruption du courant.

2. Procédé selon la revendication 1, **caractérisé par le fait que** la deuxième durée (T2) est choisie de façon à obtenir à la fin de ladite impulsion d'échantillonnage, un courant résiduel circulant dans le transistor suiveur inférieur à un seuil prédéterminé correspondant à un niveau de seuil prédéterminé du bruit du transistor suiveur.

3. Procédé selon la revendication 2, **caractérisé par le fait que** le niveau de seuil prédéterminé pour le bruit du transistor suiveur est compris entre 50 et 100 microvolts environ.

**4.** Procédé selon l'une des revendications précédentes, **caractérisé par le fait que** ladite première durée (T1) est une fraction de la durée de ladite impulsion d'échantillonnage, le courant de polarisation étant alors supérieur à un seuil prédéterminé.

**5.** Procédé selon la revendication 4, **caractérisé par le fait que** la durée de l'impulsion d'échantillonnage est de l'ordre de 1 microseconde, **par le fait que** la première durée est de l'ordre de 100 nanosecondes, et **par le fait que** le courant de polarisation est de l'ordre 10 microampères.

**6.** Procédé selon l'une des revendications précédentes, **caractérisé par le fait qu'**on précharge (PRCH) chaque condensateur d'échantillonnage à une valeur initiale prédéterminée avant chaque impulsion d'échantillonnage.

**7.** Capteur d'image, comprenant une matrice de pixels actifs, et des moyens de traitement des informations délivrées par ladite matrice de pixels actifs, les moyens de traitement comportant une paire de condensateurs d'échantillonnage (C1; C2) par colonne de la matrice aptes à être respectivement reliés électriquement au transistor suiveur de chaque pixel de la colonne au cours de deux impulsions d'échantillonnage respectives correspondant respectivement à deux niveaux de tension pixel différents successifs appliqués sur la grille du transistor suiveur, **caractérisé par le fait que** les moyens de traitement comportent une source de courant (PLS) connectée à chaque colonne de la matrice, et apte à délivrer sur commande (K) à ladite colonne un courant de polarisation constant prédéterminé, et des moyens de commande aptes pour chaque condensateur d'échantillonnage et au cours de l'impulsion d'échantillonnage correspondante,

- à alimenter la colonne avec ledit courant de polarisation (IPOL) pendant une première durée prédéterminée de façon à obtenir pour ledit condensateur d'échantillonnage un état final de charge stable,
- puis à interrompre l'alimentation de ladite colonne par le courant de polarisation,
- la fin de l'impulsion d'échantillonnage intervenant au bout d'une deuxième durée (T2) prédéterminée après ladite interruption du courant.

**8.** Capteur selon la revendication 7, **caractérisé par le fait que** la deuxième durée est choisie de façon à obtenir à la fin de l'impulsion d'échantillonnage, un courant résiduel circulant dans le transistor suiveur inférieur à un seuil prédéterminé correspondant à un niveau de seuil prédéterminé du bruit du transistor suiveur.

**9.** Capteur selon la revendication 8, **caractérisé par le fait que** le niveau de seuil prédéterminé pour le bruit du transistor suiveur est compris entre 50 et 100 microvolts environ.

**10.** Capteur selon l'une des revendications 7 à 9, **caractérisé par le fait que** ladite première durée (T1) est une fraction de la durée de ladite impulsion d'échantillonnage, le courant de polarisation étant alors supérieur à un seuil prédéterminé.

**11.** Capteur selon la revendication 10, **caractérisé par le fait que** la durée de l'impulsion d'échantillonnage est de l'ordre de 1 microseconde, **par le fait que** la première durée est de l'ordre de 100 nanosecondes, et **par le fait que** le courant de polarisation est de l'ordre 10 microampères.

**12.** Capteur selon l'une des revendications 7 à 11, **caractérisé par le fait que** la source de courant est connectée à ladite colonne par un interrupteur commandable par les moyens de commande.

**13.** Capteur selon l'une des revendications 7 à 12, **caractérisé par le fait que** les moyens de traitement comportent des moyens de précharge aptes à précharger chaque condensateur d'échantillonnage à une valeur initiale prédéterminée avant chaque impulsion d'échantillonnage.

**14.** Capteur selon la revendication 13, **caractérisé par le fait que** chaque condensateur d'échantillonnage possède une borne reliée à la masse, et **par le fait que** les moyens de précharge comportent deux interrupteurs supplémentaires commandables (IT1 ; IT2) aptes à relier respectivement les deux autres bornes des deux condensateurs d'échantillonnage à la masse.

**15.** Dispositif d'acquisition d'images, par exemple une caméra vidéo, **caractérisé par le fait qu'**il comporte au moins un capteur d'image selon l'une des revendications 7 à 14.

**Patentansprüche**

**1.** Verfahren zum Abtasten des Signals, das von einem aktiven Pixel eines Bildsensors gesendet wird, das eine Phase des Speicherns des Signals in einem Paar von Abtastkondensatoren umfasst, die zwei effektive elektrische Verbindungen umfassen, die jeweils auf die zwei Abtastkondensatoren mit dem Folgetransistor des Pixels im Laufe von zwei jeweiligen Abtastimpulsen folgen, welche jeweils zwei unterschiedlichen aufeinander folgenden Pixelspannungsniveaus entsprechen, die an das Gate des Folgetransistors angelegt werden, **dadurch**

**gekennzeichnet, dass** die Speicherphase für jeden Abtastkondensator (C1; C2) Folgendes umfasst:

- das Anlegen an diesen Abtastkondensator (C1; C2) einer Spannung, die gleich der entsprechenden Pixelspannung vermindert um den Wert der Gatequellenspannung des Folgetransistors ist, der mit einem konstanten vorausbestimmten Polarisierungsstrom während einer ersten vorausbestimmten Dauer (T1) polarisiert ist, um für den Abtastkondensator einen stabilen Endladezustand zu erzielen,

- das Unterbrechen des Polarisierungsstroms (IPOL),

- wobei das Ende des Abtastimpulses nach einer zweiten vorausbestimmten Dauer (T2) nach dem Unterbrechen des Stroms eintritt.

2. Verfahren nach Anspruch 1, **dadurch gekennzeichnet, dass** die zweite Dauer (T2) so ausgewählt wird, dass man am Ende des Abtastimpulses einen Reststrom erzielt, der in dem Folgetransistor zirkuliert, der kleiner ist als ein vorausbestimmter Schwellenwert, der einem vorausbestimmten Schwellenwertniveau des Rauschens des Folgetransistors entspricht.

3. Verfahren nach Anspruch 2, **dadurch gekennzeichnet, dass** das Niveau des vorausbestimmten Schwellenwerts für das Rauschen des Folgetransistors zwischen etwa 15 und 100 Mikrovolt liegt.

4. Verfahren nach einem der vorhergehenden Ansprüche, **dadurch gekennzeichnet, dass** die erste Dauer (T1) ein Bruchteil der Dauer des Abtastimpulses ist, wobei der Polarisierungsstrom daher größer ist als ein vorausbestimmter Schwellenwert.

5. Verfahren nach Anspruch 4, **dadurch gekennzeichnet, dass** die Dauer des Abtastimpulses in der Größenordnung einer Mikrosekunde liegt, dass die erste Dauer in der Größenordnung von 100 Nanosekunden liegt, und dass der Polarisierungsstrom in der Größenordnung von 10 Mikroampere liegt.

6. Verfahren nach einem der vorhergehenden Ansprüche, **dadurch gekennzeichnet, dass** man jeden Abtastkondensator mit einem ursprünglich vorausbestimmten Wert vor jedem Abtastimpuls vorlädt (PRCH).

7. Bildsensor, der eine Matrix aus aktiven Pixeln enthält und Mittel zum Verarbeiten der Daten, die von der Matrix aus aktiven Pixeln geliefert werden, umfasst, wobei die Verarbeitungsmittel pro Spalte der Matrix ein Paar Abtastkondensatoren (C1; C2) umfassen, die jeweils mit dem Folgetransistor jedes Pixels der Spalte im Laufe von zwei jeweiligen Abtastimpulsen verbunden werden können, welche jeweils zwei unterschiedlichen aufeinander folgenden Pixelspannungsniveaus entsprechen, die an das Gate des Folgetransistors angelegt werden, **dadurch gekennzeichnet, dass** die Verarbeitungsmittel eine Stromquelle (PLS) umfassen, die an jede Spalte der Matrix angeschlossen und geeignet ist, auf Befehl (K) der Spalte einen vorausbestimmten konstanten Polarisierungsstrom zu senden, und Steuermittel, die für jeden Abtastkondensator und im Laufe des entsprechenden Abtastimpulses Folgendes können:

- die Spalte mit dem Polarisierungsstrom (IPOL) während einer ersten vorausbestimmten Dauer versorgen, so dass für den Abtastkondensator ein stabiler Endladezustand erzielt wird,

- danach die Stromversorgung der Spalte mit dem Polarisierungsstrom zu unterbrechen,

- wobei das Ende des Abtastimpulses nach einer zweiten vorausbestimmten Dauer (T2) nach dem Unterbrechen des Stroms eintritt.

8. Sensor nach Anspruch 7, **dadurch gekennzeichnet, dass** die zweite Dauer so ausgewählt ist, dass am Ende des Abtastimpulses ein Reststrom, der in dem Folgetransistor zirkuliert, erzielt wird, der kleiner ist als ein vorausbestimmter Schwellenwert, der einem vorausbestimmten Schwellenwertniveau des Rauschens des Folgetransistors entspricht.

9. Sensor nach Anspruch 8, **dadurch gekennzeichnet, dass** das vorausbestimmte Schwellenwertniveau für das Rauschen des Folgetransistors zwischen etwa 50 und 100 Mikrovolt liegt.

10. Sensor nach einem der Ansprüche 7 bis 9, **dadurch gekennzeichnet, dass** die erste Dauer (T1) ein Bruchteil der Dauer des Abtastimpulses ist, wobei der Polarisierungsstrom daher größer ist als ein vorausbestimmter Schwellenwert.

11. Sensor nach Anspruch 10, **dadurch gekennzeichnet, dass** die Dauer des Abtastimpulses in der Größenordnung von 1 Mikrosekunde liegt, dass die erste Dauer in der Größenordnung von 100 Nanosekunden liegt und dass der Polarisierungsstrom in der Größenordnung von 10 Mikroampere liegt.

12. Sensor nach einem der Ansprüche 7 bis 11, **dadurch gekennzeichnet, dass** die Stromquelle an die Spalte mit einem durch die Steuermittel steuerbaren Ein/Ausschalter angeschlossen ist.

13. Sensor nach einem der Ansprüche 7 bis 12, **dadurch gekennzeichnet, dass** die Verarbeitungsmittel Vorlademittel umfassen, die jeden Abtastkondensator mit einem vorausbestimmten ursprünglichen Wert vor jedem Abtastimpuls aufladen können.

14. Sensor nach Anspruch 13, **dadurch gekennzeichnet, dass** jeder Abtastkondensator eine Klemme besitzt, die an die Masse gelegt ist, und dass die Vorlademittel zwei zusätzliche steuerbare Ein/Ausschalter (IT1; IT2) umfassen, die jeweils die zwei anderen Klemmen der zwei Abtastkondensatoren an die Masse legen können.

15. Vorrichtung zum Erfassen von Bildern, zum Beispiel eine Videokamera, **dadurch gekennzeichnet, dass** sie mindestens einen Bildsensor nach einem der Ansprüche 7 bis 14 umfasst.

**Claims**

1. Process for sampling the signal delivered by an active pixel of an image sensor, comprising a phase of storage of the signal in a pair of sampling capacitors comprising two successive respective effective electrical links of the two sampling capacitors with the follower transistor tracking the pixel in the course of the two respective sampling pulses corresponding respectively to two successive different levels of pixel voltage that are applied to the gate of the follower transistor, **characterized in that** the storage phase comprises for each sampling capacitor (C1; C2),

   - the application to this sampling capacitor (C1; C2) of a voltage equal to the corresponding pixel voltage minus the value of the gate-source voltage of the follower transistor biased with a predetermined constant bias current, for a first predetermined duration (T1) so as to obtain for the said sampling capacitor a final state of stable charge,
   - the interruption of the bias current (IPOL),
   - the end of the sampling pulse occurring on completion of a second predetermined duration (T2) after the said interruption of the current.

2. Process according to Claim 1, **characterized in that** the second duration (T2) is chosen in such a way as to obtain at the end of the said sampling pulse, a residual current flowing through the follower transistor less than a predetermined threshold corresponding to a predetermined threshold level of the noise of the follower transistor.

3. Process according to Claim 2, **characterized in that** the predetermined threshold level for the noise of the follower transistor lies between 50 and 100 microvolts approximately.

4. Process according to one of the preceding claims, **characterized in that** the said first duration (T1) is a fraction of the duration of the said sampling pulse, the bias current then being greater than a predetermined threshold.

5. Process according to Claim 4, **characterized in that** the duration of the sampling pulse is of the order of one microsecond, **in that** the first duration is of the order of 100 nanoseconds, and **in that** the bias current is of the order of 10 microamperes.

6. Process according to one of the preceding claims, **characterized in that** each sampling capacitor is precharged (PRCH) to a predetermined initial value before each sampling pulse.

7. Image sensor, comprising a matrix of active pixels, and means for processing the information delivered by the said matrix of active pixels, the processing means comprising a pair of sampling capacitors (C1; C2) per column of the matrix that are able to be respectively linked electrically to the follower transistor tracking each pixel of the column in the course of two respective sampling pulses corresponding respectively to two successive different levels of pixel voltage that are applied to the gate of the follower transistor, **characterized in that** the processing means comprise a current source (PLS) connected to each column of the matrix, and able to deliver on command (K) to the said column a predetermined constant bias current, and control means able for each sampling capacitor and in the course of the corresponding sampling pulse,

   - to energize the column with the said bias current (IPOL) for a first predetermined duration so as to obtain for the said sampling capacitor a final state of stable charge,
   - then to interrupt the energizing of the said column by the bias current,
   - the end of the sampling pulse occurring on completion of a second predetermined duration (T2) after the said interruption of the current.

8. Sensor according to Claim 7, **characterized in that** the second duration is chosen in such a way as to obtain at the end of the sampling pulse, a residual current flowing through the follower transistor less than a predetermined threshold corresponding to a predetermined threshold level of the noise of the follower transistor.

**9.** Sensor according to Claim 8, **characterized in that** the predetermined threshold level for the noise of the follower transistor lies between 50 and 100 microvolts approximately.

**10.** Sensor according to any one of Claims 7 to 9, **characterized in that** the said first duration (T1) is a fraction of the duration of the said sampling pulse, the bias current then being greater than a predetermined threshold.

**11.** Sensor according to Claim 10, **characterized in that** the duration of the sampling pulse is of the order of one microsecond, **in that** the first duration is of the order of 100 nanoseconds, and **in that** the bias current is of the order of 10 microamperes.

**12.** Sensor according to one of Claims 7 to 11, **characterized in that** the current source is connected to the said column by an interrupter controllable by the control means.

**13.** Sensor according to one of Claims 7 to 12, **characterized in that** the processing means comprise precharging means able to precharge each sampling capacitor to a predetermined initial value before each sampling pulse.

**14.** Sensor according to Claim 13, **characterized in that** each sampling capacitor possesses a terminal linked to earth, and **in that** the precharging means comprise two additional controllable interrupters (IT1; IT2) able to link respectively the other two terminals of the two sampling capacitors to earth.

**15.** Image acquisition device, for example a video camera, **characterized in that** it comprises at least one image sensor according to one of Claims 7 to 14.

# FIG.1

EP 1 473 927 B1

FIG.2

# FIG.3